# EUROPEAN PATENT APPLICATION

(11) **EP 3 029 602 A1**
(43) Date of publication of application: **08.06.2016**
(21) Application number: 14196328.0
(22) Date of filing: 04.12.2014
(51) Int. Cl.: G06K 9/00, G06K 9/20

(54) **Method and apparatus for detecting a free driving space**

(71) Applicant: Conti Temic Microelectronic GmbH, 90411 Nürnberg (DE)
(72) Inventor: Dhana Sekaran, Sudhan, 96317 Kronach (DE); Schrepfer, Jörg, 96355 Tettau (DE)

(57) **Abstract**

An assistance system for detecting a free driving space in a surrounding of a vehicle (VEH), said assistance system (1) comprising: vehicle cameras (2-i) with overlapping viewing areas adapted to capture camera images of the vehicle's surrounding; an image processing unit (3) adapted to compare corresponding camera image sections of camera images of at least one overlapping region (OR) captured by two adjacent vehicle cameras and adapted to identify matching structural features in both camera image sections; a calculation unit (4) adapted to calculate coordinates of the identified matching features relative to the vehicle (VEH) and to store them in an occupancy grid map (OGM) of the vehicle's surrounding; and an evaluation unit (6) adapted to evaluate the occupancy grid map (OGM) to detect a free driving space for the vehicle in the vehicle's surrounding.

## Description

The invention relates to a method and apparatus for detecting a free driving space in a surrounding of a vehicle.

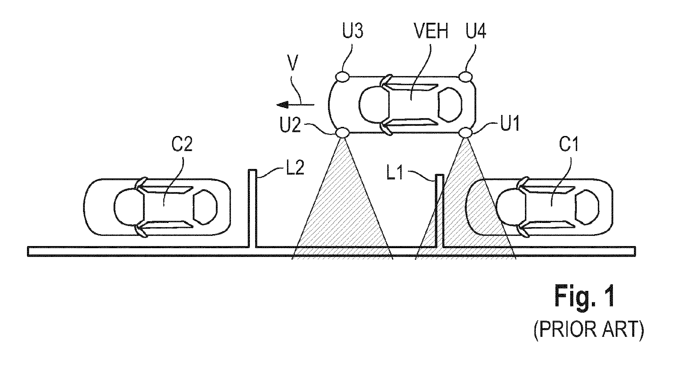

Vehicles such as cars or trucks comprise driver assistance systems which support the driver of the vehicle when performing driving maneuvers. For performing driving maneuvers, free driving space in the vicinity of the respective vehicle has to be detected. A driving maneuver can be for instance a maneuver where the driver of the vehicle is parking the vehicle within an empty parking lot as illustrated in Figure 1. Conventional driver assistance systems use ultrasonic scanners for scanning the vehicle's surrounding for parking lots. The ultrasonic scanners can be positioned at the side of the vehicle's chassis to detect free parking space for the vehicle. The ultrasonic sensors or scanners are not able to detect parking marks or lines L which also can be used for performing an accurate automotive parking maneuver. As illustrated in Figure 1, a vehicle moving along a row of parking cars C1, C2 comprises ultrasonic sensors U1, U2, U3, U4 on both sides of the vehicle to scan the vehicle's surrounding. The ultrasonic-based parking system of the vehicle is able to detect the parking cars C1, C2 but fails to detect parking lines L1, L2 painted on the ground.

Conventional video-based scanning systems for scanning empty spaces use a single camera. These video-based scanning systems are based on a structure from motion approaches causing a very high computation load and provide inaccurate results.

Accordingly, it is an object of the present invention to provide a method and apparatus for detecting accurately a free driving space in a surrounding of a vehicle.

This object is achieved according to a first aspect of the present invention by a method comprising the features of claim 1.

The invention provides according to the first aspect of the present invention a method for detecting a free driving space in a surrounding of a vehicle comprising the steps of: capturing camera images of the vehicle's surrounding by vehicle cameras having overlapping viewing areas;
comparing corresponding camera image sections of camera images of at least one overlapping region captured by two adjacent vehicle cameras with each other to identify matching structural features in both camera image sections; calculating coordinates of the identified matching features relative to the vehicle and storing the calculated coordinates in an occupancy grid map of the vehicle's surrounding; and
evaluating the occupancy grid map to detect a free driving space in particular a free parking slot in the vehicle's surrounding.

In a possible embodiment of the method according to the first aspect of the present invention, camera image sections of camera images of the overlapping region captured by two adjacent vehicle cameras are processed to detect identical features of objects located within the respective overlapping region.

In a further possible embodiment of the method according to the first aspect of the present invention, the captured camera images of two adjacent vehicle cameras having overlapping viewing areas are processed using predetermined projection functions of the vehicle cameras to provide undistorted camera images of the overlapping region.

In a further possible embodiment of the method according to the first aspect of the present invention, the camera images are captured by the vehicle's cameras and processed when the vehicle is standing and/or when the vehicle is moving.

In a further possible embodiment of the method according to the first aspect of the present invention, a distance between the vehicle's chassis and a detected feature of an object in the vehicle's surrounding and/or an angle of the detected feature relative to the vehicle's chassis are calculated by triangulation.

In a further possible embodiment of the method according to the first aspect of the present invention, the camera images of overlapping regions comprising at least one detected object are further processed to classify the detected objects.

In a further possible embodiment of the method according to the first aspect of the present invention, the coordinates of the detected objects located in the overlapping region are evaluated to decide, whether the respective objects form driving obstacles for the vehicle.

In a further possible embodiment of the method according to the first aspect of the present invention, if no driving obstacles are located within the overlapping region, the overlapping region is classified as free driving space for the vehicle.

In a further possible embodiment of the method according to the first aspect of the present invention, the calculated coordinates of the identified matching features are three-dimensional coordinates.

In a further possible embodiment of the method according to the first aspect of the present invention, each camera image section comprises a pixel block of predetermined size.

The invention further provides according to a second aspect an assistance system for detecting a free driving space in a surrounding of a vehicle comprising the features of claim 11.

The invention provides according to the second aspect of the present invention an assistance system for detecting a free driving space in a surrounding of a vehicle,
said assistance system comprising:
vehicle cameras with overlapping viewing areas adapted to capture camera images of the vehicle's surrounding,
an image processing unit adapted to compare corresponding camera image sections of camera images of at least one overlapping region captured by two adjacent vehicle cameras and adapted to identify matching structural features in both camera image sections,
a calculation unit adapted to calculate coordinates of the identified matching features relative to the vehicle and to store them in an occupancy grid map of the vehicle's surrounding, and
an evaluation unit adapted to evaluate the occupancy grid map to detect a free driving space for the vehicle in particular a free parking slot in the vehicle's surrounding.

In a possible embodiment of the assistance system according to the second aspect of the present invention, the assistance system comprises at least four vehicle cameras provided at different sides of the vehicle's chassis,
wherein each vehicle camera has a field of view greater than 180 degrees.

In a possible embodiment of the assistance system according to the second aspect of the present invention, the image processing unit is adapted to process the captured camera images using predetermined projection functions to provide undistorted camera images of the overlapping region.

In a further possible embodiment of the assistance system according to the second aspect of the present invention, the calculation unit is adapted to calculate a distance between the vehicle's chassis and a detected feature of an object in the vehicle's surrounding and/or an angle of the detected feature relative to the vehicle's chassis.

In a still further possible embodiment of the assistance system according to the second aspect of the present invention, the evaluation unit is adapted to evaluate the occupancy grid map to detect objects located in the overlapping region forming driving obstacles to the vehicle.

In a possible embodiment the assistance system is a parking assistance system of a vehicle adapted to detect a free parking slot in a surrounding of the vehicle.

In the following, possible embodiments of the method and apparatus according to the present invention are described with reference to the enclosed figures in more detail.
- Figure 1: shows a diagram for illustrating the operation of a conventional parking assistance system;
- Figure 2: shows a block diagram of a possible exemplary embodiment of an assistance system according to the present invention;
- Figure 3: shows a flowchart of a possible exemplary embodiment of a method for detecting a free driving space in a surrounding of a vehicle according to the present invention;
- Figure 4: shows a diagram for illustrating the operation of a method and apparatus according to the present invention;
- Figure 5: shows a diagram for illustrating a possible use case of a method and apparatus according to the present invention;
- Figure 6: shows a further diagram for illustrating a further possible use case of a method and apparatus according to the present invention.

### DETAILED DESCRIPTION OF EMBODIMENTS

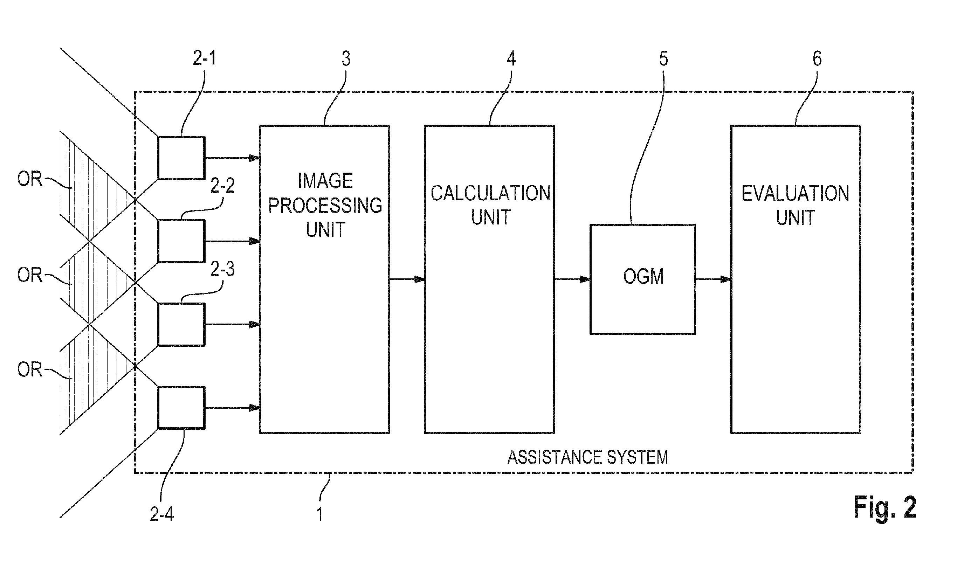

As can be seen in the block diagram of Figure 2, the invention provides according to an aspect of the present invention an assistance system 1 for detecting a free driving space in a surrounding of a vehicle. The assistance system 1 as shown in Figure 2 can form part of a driver assistance system of a vehicle, in particular of a car or truck. The assistance system 1 comprises several vehicle cameras 2-1, 2-2, 2-3, 2-4 adapted to capture camera images of the vehicle's surrounding. The vehicle cameras are provided in a preferred embodiment at different sides of the vehicle's chassis. In a preferred embodiment, each vehicle camera 2-i has a field of view (FOV) or viewing range greater than 180 degrees. In a possible embodiment, the vehicle cameras 2-i can be formed by fisheye cameras. In a possible embodiment, the assistance system 1 comprises four vehicle cameras provided at different sides of the vehicle's chassis. In a possible embodiment, the assistance system 1 comprises a front camera provided at the front side of the vehicle's chassis, a rear camera located at the rear of the vehicle's chassis and two side cameras located on both sides of the vehicle's chassis. The number of vehicle cameras 2-i used by the assistance system 1 can vary depending on the form and size of the vehicle's chassis.

The assistance system 1 as shown in Figure 2 further comprises an image processing unit 3 receiving the captured camera images from the vehicle cameras 2-i. The image processing unit 3 of the assistance system 1 is adapted to compare corresponding camera image sections of camera images of at least one overlapping region OR captured by two adjacent vehicle cameras as illustrated schematically in Figure 2. The image processing unit 3 is further adapted to identify matching structural features in the corresponding camera image sections. In a possible embodiment, a camera image section of a camera image comprises a pixel block within the camera image having a predetermined pixel block size. In a possible embodiment, the compared camera image section comprises for instance 16x16 or 32x32 image pixels.

The assistance system 1 further comprises a calculation unit 4 which is adapted to calculate coordinates of the identified matching features relative to the vehicle and to store them in an occupancy grid map OGM of the vehicle's surrounding within a data memory 5. The assistance system 1 further comprises an evaluation unit 6 having access to the data memory 5 and being adapted to evaluate the occupancy grid map OGM stored in the data memory 5 to detect a free driving space for the vehicle in the vehicle's surrounding. In a possible embodiment, the evaluation unit 6 is further adapted to evaluate the occupancy grid map OGM to detect objects located in the overlapping region OR forming driving obstacles to the vehicle. In a possible embodiment of the assistance system 1 according to the present invention as illustrated in Figure 2, the image processing unit 3 is further adapted to process the captured camera images received from the vehicle cameras 2-i using predetermined projection functions of the vehicle cameras 2-i to provide undistorted camera images of the overlapping regions OR. The corresponding camera image sections of the undistorted camera images are then compared with each other to identify matching structural features in both corresponding camera image sections of the undistorted camera images. Features of objects, in particular structural features, occurring in the overlap region OR are seen by two adjacent vehicle cameras 2-i at the same time. In particular, captured free space in the ground plane does match in both undistorted camera images. If camera images do not match in certain sectors, it is concluded to comprise objects forming occupied space. This allows a quick scanning for objects in a sector of an overlapping area. It is possible to build different kinds of grids in the region of interest. In a possible embodiment, pixel information or pixel data such as intensity is computed by the image processing unit 3 for each grid with projection functions of the vehicle cameras 2-i followed by a grid matching process. Grid matching results in coordinates of features of objects located in the overlapping region OR. In a preferred embodiment, the calculation unit 4 calculates three-dimensional coordinates of identified matching features. The calculated coordinates are relative coordinates indicating the relative position of the identified matching features relative to the vehicle's chassis. The calculation unit 4 can be further adapted to calculate a distance between the vehicle's chassis and a detected feature of an object in the vehicle's surrounding and/or an angle of the detected feature relative to the vehicle's chassis. In a possible embodiment, a calculated distance and angle is also stored in data memory. The camera-based scanning delivers very accurate results both in angle and distance.

Camera images captured by the vehicle cameras 2-i can be processed when the vehicle is not moving and/or while the vehicle is moving. The camera images of an overlapping region OR comprising at least one detected feature of an object are further processed to classify the detected objects. The coordinates of the detected objects located in the overlapping region OR can be evaluated by the evaluation unit 6 to decide, whether the respective objects form driving obstacles for the vehicle. For example, an object having a height less than 10 cm over driving ground can be classified by the evaluation unit 6 as not forming a driving obstacle. In contrast, an object having a height of more than 20 cm over driving ground can be classified by the evaluation unit 6 as forming a driving obstacle. If no driving obstacles are located within the overlapping region OR, the overlapping region OR can be classified by the evaluation unit 6 of the assistance system 1 as a free driving space. The features identified by the image processing unit 3 as matching features in both corresponding camera image sections of camera images captured by adjacent vehicle cameras 2-i, 2-j can be patterns or markings on driving ground level such as parking marks or parking lines. The structural patterns or features can be further evaluated by the evaluation unit 6 of the assistance system 1 to support a driving maneuver, in particular a driving parking maneuver. The features form part of an object. This object can be a three-dimensional object, for example a rock or stone, or a two-dimensional object, for instance a parking line pattern or the like. The calculation unit 4 of the assistance system 1 is configured to calculate coordinates of the identified matching features or pattern relative to the vehicle and to store the calculated coordinates in the occupancy grid map OGM.

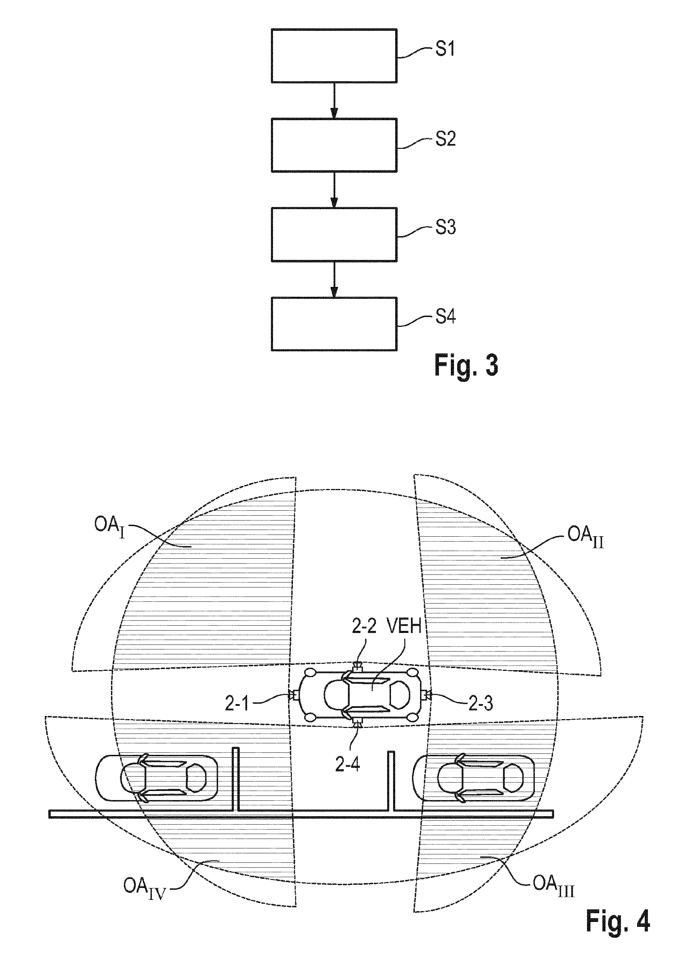

Figure 3 shows a flowchart of a possible exemplary embodiment of a method for detecting a free driving space in a surrounding of a vehicle according to an aspect of the present invention.

In a first step S1, camera images of the vehicle's surrounding are captured by vehicle cameras having overlapping viewing areas. In a possible embodiment, the camera images are captured by vehicle cameras each having a field of view greater than 180 degrees. These vehicle cameras can be provided at different sides of the vehicle's chassis.

In a further step S2, corresponding camera image sections of camera images of at least one overlapping region OR captured by two adjacent vehicle cameras are compared with each other to identify matching structural features in both camera image sections. Each camera image section can comprise a pixel block of predetermined size.

In a further step S3, coordinates of the identified matching features relative to the vehicle are calculated and stored in an occupancy grid map OGM of the vehicle's surrounding. The calculated coordinates are in a preferred embodiment three-dimensional coordinates.

In a further step S4, the occupancy grid map OGM is evaluated to detect free driving space in the vehicle's surrounding.

In a possible embodiment, camera images of overlapping regions OR comprising at least one detected object are further processed to classify the detected object. In a possible embodiment, the coordinates of the detected object located in the overlapping region OR are evaluated to decide, whether the respective objects form driving obstacles for the respective vehicle. If no driving obstacles are located within the overlapping region OR, the respective overlapping region OR can be classified as forming part of a free driving space or free parking lot. The steps illustrated in Figure 3 can be performed while the vehicle is standing and also while the vehicle is moving.

Figure 4 shows a schematic diagram for illustrating the operation of the method and apparatus according to the present invention. In the illustrated example, the vehicle VEH comprises an assistance system 1 according to the present invention having four vehicle cameras 2-i at different sides of the vehicle's chassis. The four vehicle cameras 2-1, 2-2, 2-3, 2-4 each have a field of view, FOV, greater than 180 degrees. Accordingly, four overlap areas exist where the camera images of two adjacent vehicle cameras do overlap each other. In the example shown in Figure 4, the overlap area OA_{I} is the overlap area where the camera images of the front vehicle camera 2-1 and the right vehicle side camera 2-2 do overlap each other. The viewing area of the adjacent vehicle cameras is overlapping. Objects occurring or located in the overlap area are seen by two adjacent vehicle cameras at the same time. Free space in a ground plane will match in the undistorted camera images of adjacent vehicle cameras. If camera images do not match in certain sectors, it can be concluded that it is occupied space.

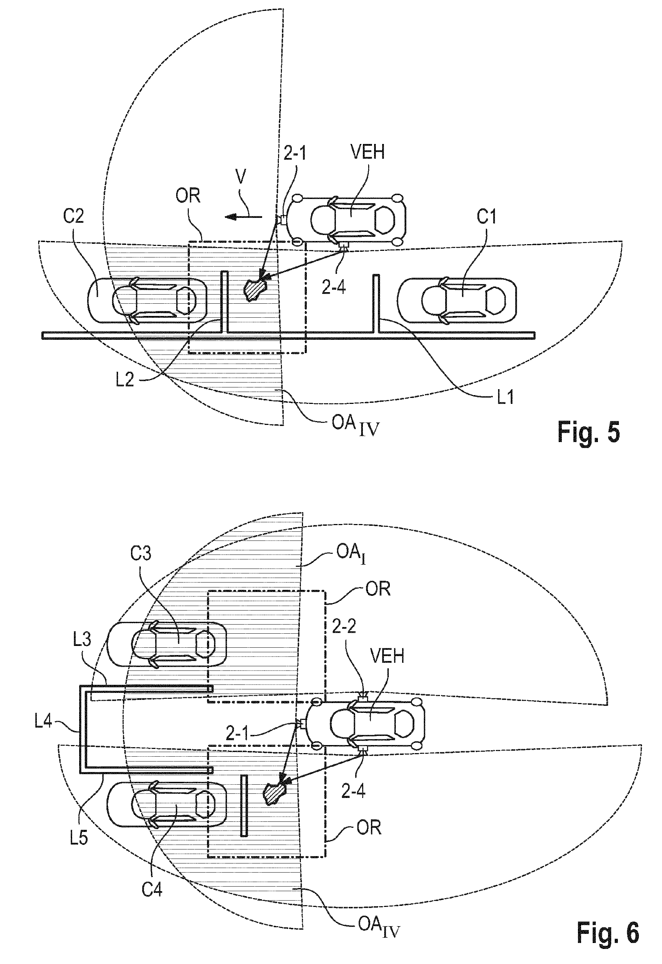

Figure 5 shows a further diagram for illustrating the operation of the method and apparatus according to the present invention. A vehicle having an assistance system 1 according to the present invention is moving along a row of parking cars C1, C2 with a moving speed V. Between the two parking cars C1, C2, there is a parking lot defined by two parking lines L1, L2 provided on ground level. Within the overlapping area OA_{IV}, the front vehicle camera 2-1 and the left vehicle camera 2-4 has a usable overlapping region OR of predetermined size, for instance an area of 5x5m. In the region of interest, the assistance system 1 according to the present invention can detect an object O and store its coordinates in the occupancy grid map OGM. Since the vehicle VEH is moving along the parking cars, a complete scan of the parking area can be performed. The calculation unit 4 of the assistance system 1 can calculate a distance between the vehicle's chassis and the detected object O in the vehicle's surrounding as well as an angle of the detected object O relative to the vehicle's chassis by triangulation as illustrated in Figure 5. The evaluation unit 6 of the assistance system 1 is adapted to evaluate the occupancy grid map OGM to detect the object O located in the overlapping region OR and further evaluate, whether the detected object O forms a driving obstacle to the vehicle VEH or not. In the example illustrated in Figure 5, if the obstacle O is a stone or rock having a height of more than a predetermined threshold value, the object O is classified as a driving obstacle, but in contrast, if the detected object O is only a small stone with a low height of less than a predetermined threshold value, the detected object O can be classified by the evaluation unit 6 as not forming a driving obstacle. If no driving obstacles are located within the overlapping region OR, the overlapping region OR is classified as free driving space and can also be used for parking the vehicle. Since the vehicle VEH is moving, the complete parking space between lines L1, L2 can be scanned. If there are no obstacles in the parking lot between the lines L1, L2, the distance between both lines L1, L2 can be measured and it can be decided by the assistance system 1, whether the size of the parking lot is sufficient for parking the vehicle VEH within the parking lot. With the camera-based system according to the present invention, it is possible not only to detect three-dimensional physical objects but also patterns or lines L painted on the ground. Accordingly, the assistance system 1 according to the present invention can also detect the parking lines L1, L2 and perform a calculation with respect to the distance between both parking lines L1, L2. In a possible embodiment, the dimensions of the vehicle's chassis are stored in a memory and can be compared with the size of the identified parking lot. If the size of the parking lot is sufficient, a control unit can use the data stored in the occupancy grid map OGM to assist the driver in a parking maneuver for driving the vehicle VEH into the parking lot between lines L1, L2.

Figure 6 shows a further example illustrating the operation of a method and apparatus according to the present invention. In the shown example, the assistance system 1 according to the present invention can perform a scanning for a perpendicular parking of the vehicle between two cars C3, C4. The parking lot in the given example is defined by the parking lines L3, L4, L5 as shown in Figure 6. The assistance system 1 can evaluate the camera image data of the usable overlapping regions in the overlapping areas OA_{I} and OA_{IV} as shown in Figure 6. By also scanning the parking lines L3, L4, L5, the assistance system 1 can support the driver in accurately parking his vehicle VEH in the parking lot between the parking cars C3, C4. The same approach can be used in the rear side of the vehicle when driving a vehicle backwards into a parking lot.

In a possible embodiment, each vehicle camera 2-i provides a camera image with a predetermined number of pixels, for instance 1280x960 pixel. The usable overlapping region OR forms part of the camera image and can have a size of for instance 400x300 pixel. In a possible embodiment, the camera sections of camera images of an overlapping region OR captured by two adjacent vehicle cameras and compared with each other can comprise a pixel block of predetermined size, for instance 16x16 or 32x32 pixel.

Further embodiments of the assistance system 1 according to the present invention are possible. In a possible embodiment, the image processing unit 3, the calculation unit 4 and the evaluation unit 6 can be integrated in a computation unit of the assistance system 1. The assistance system 1 can form part of a driver assistance system of a vehicle. The computation unit can comprise one or several processors to perform the method as illustrated in the flowchart of Figure 3. Data processing is performed in a preferred embodiment in real-time. The method and apparatus according to the present invention can be used for any kind of vehicle, in particular land vehicles. The method and apparatus according to the present invention can be used by vehicles on-road as well as off-road. The method and apparatus according to the present invention can support a driver when performing driving maneuvers, in particular when parking the vehicle in a parking lot.

### REFERENCE SIGNS

- 1: assistance system
- 2: vehicle camera
- 3: image processing unit
- 4: calculation unit
- 5: memory
- 6: evaluation unit

## Claims

1. A method for detecting a free driving space in a surrounding of a vehicle (VEH) comprising the steps of:
(a) capturing (S1) camera images of the vehicle's surrounding by vehicle cameras (2-i) having overlapping viewing areas;
(b) comparing (S2) corresponding camera image sections of camera images of at least one overlapping region (OR) captured by two adjacent vehicle cameras (2-i, 2-j) with each other to identify matching structural features in both camera image sections;
(c) calculating (S3) coordinates of the identified matching features relative to the vehicle (VEH) and storing the calculated coordinates in an occupancy grid map (OGM) of the vehicle's surrounding; and
(d) evaluating (S4) the occupancy grid map (OGM) to detect a free driving space in particular a free parking slot in the vehicle's surrounding.

2. The method according to claim 1, wherein the camera image sections of the camera images of the overlapping region (OR) captured by two adjacent vehicle cameras are processed to detect identical features of objects (O) located within the respective overlapping region (OR).

3. The method according to one of the preceding claims 1 or 2, wherein the captured camera images of two adjacent vehicle cameras having overlapping viewing areas are processed using predetermined projection functions of the vehicle cameras (2-i) to provide undistorted camera images of the overlapping region (OR).

4. The method according to one of the preceding claims 1 to 3, wherein the camera images are captured by the vehicle's cameras (2-i) and processed when the vehicle (VEH) is standing and/or while the vehicle is moving.

5. The method according to one of the preceding claims 1 to 4, wherein a distance between the vehicle's chassis and a detected feature of an object (O) in the vehicle's surrounding and/or an angle of the detected feature relative to the vehicle's chassis are calculated by triangulation.

6. The method according to one of the preceding claims 2 to 5, wherein camera images of overlapping regions (OR) comprising at least one detected object (O) are further processed to classify the detected objects.

7. The method according to claim 6, wherein the coordinates of the detected objects (O) located in the overlapping region (OR) are evaluated to decide, whether the respective objects form driving obstacles for the vehicle (VEH).

8. The method according to claim 7, wherein if no driving obstacles are located within the overlapping region (OR), the overlapping region is classified as free driving space.

9. The method according to one of the preceding claims 1 to 8, wherein the calculated coordinates of the identified matching features are three-dimensional coordinates.

10. The method according to one of the preceding claims 1 to 9, wherein each camera image section comprises a pixel block of predetermined size.

11. An assistance system for detecting a free driving space in a surrounding of a vehicle (VEH),
said assistance system (1) comprising:
(a) vehicle cameras (2-i) with overlapping viewing areas adapted to capture camera images of the vehicle's surrounding;
(b) an image processing unit (3) adapted to compare corresponding camera image sections of camera images of at least one overlapping region (OR) captured by two adjacent vehicle cameras and adapted to identify matching structural features in both camera image sections;
(c) a calculation unit (4) adapted to calculate coordinates of the identified matching features relative to the vehicle (VEH) and to store them in an occupancy grid map (OGM) of the vehicle's surrounding; and
(d) an evaluation unit (6) adapted to evaluate the occupancy grid map (OGM) to detect a free driving space for the vehicle in particular a free parking slot in the vehicle's surrounding.

12. The assistance system according to claim 11, wherein the assistance system (1) comprises at least four vehicle cameras (2-1, 2-2, 2-3, 2-4) provided at different sides of the vehicle's chassis, wherein each vehicle camera has a field of view greater than 180 degrees.

13. The assistance system according to claim 11 or 12, wherein the image processing unit (3) is adapted to process the captured camera images using predetermined projection functions to provide undistorted camera images of the overlapping region (OR).

14. The assistance system according to one of the preceding claims 11 to 13, wherein the calculation unit (4) is adapted to calculate a distance between the vehicle's chassis and a detected feature of an object (O) in the vehicle's surrounding and/or an angle of the detected feature relative to the vehicle's chassis.

15. The assistance system according to one of the preceding claims 11 to 14, wherein the evaluation unit (6) is adapted to evaluate the occupancy grid map (OGM) to detect objects located in the overlapping region (OR) forming driving obstacles to the vehicle (VEH).

16. The assistance system according to one of the preceeding claims 11 to 15, wherein the assistance system is a parking assistance system of a vehicle adapted to detect a free parking slot in a surrounding of said vehicle.
